# EUROPEAN PATENT APPLICATION

(11) **EP 4 507 088 A2**
(43) Date of publication of application: **12.02.2025**
(21) Application number: 24193301.9
(22) Date of filing: 07.08.2024
(51) Int. Cl.: H01M 50/204, H01M 50/209, H01M 50/213, H01M 50/367

(54) **METHODS AND SYSTEMS FOR EXHAUSTING HEAT GENERATED BY A HEAT-SOURCE COMPONENT**

(30) Priority: 11.08.2023 IN 202311053839; 01.08.2024 US 202418791493
(71) Applicant: Schneider Electric IT Corporation, Foxboro, MA 02035 (US)
(72) Inventor: BAMMANNI, Rajeev, 560-067 BANGALORE (IN); NARASAIAH, Mohan, 560-067 BANGALORE (IN); VIJAYAN, Santhosh Kumar, 560-067 BANGALORE (IN); GHOSH CHOWDHURY, Sumandra, 560-067 BANGALORE (IN)
(74) Representative: Plasseraud IP

(57) **Abstract**

A system includes an enclosure, a heat-source component disposed in the enclosure, and an exhaust associated with the enclosure. The exhaust is configured to exhaust heat generated by the heat-source component. The system further includes an arrester plate assembly disposed within the enclosure. The arrester plate assembly includes perforations formed therein. The arrester plate assembly is approximately parallel to the exhaust.

## Description

### BACKGROUND OF THE DISCLOSURE

### Field of Disclosure

This invention relates generally to batteries, preferably lithium-ion used in power systems, and more particularly to a flame arresting system that is configured to inhibit propagation of flame emanating from a battery pack within a power system, preferably from a lithium-ion battery pack.

### Discussion of Related Art

Battery packs, such as lithium-ion battery packs, may be used in various applications, including uninterruptible power supply (UPS) applications. The battery packs may provide backup power to the UPS. Lithium-ion cells are superior to alternative battery power sources due to their high energy density, ability to withstand cycling, low self-discharge thereby providing a longer backup time and prolonged use and storage life.

A battery pack may include any combination of a mechanical enclosure, lithium-ion cell modules, a battery management system (BMS), a printed circuit board (PCB), and/or requisite interconnections to provide both power and communications. An enclosure having an acceptable ingress progression rating may be used when forced or natural air cooling is devised to keep the cell temperatures and electronic components under the prescribed safe thermal limit.

Due to the higher energy density, thermal runaway is a concern with existing lithium-ion batteries. For example, an acceptable regulatory standard requires multiple levels of protection enabled by both software and electrical hardware on the BMS to prevent or otherwise limit thermal runaway.

A system having lithium-ion batteries may undergo a thermal runaway event. A thermal runaway event may include a short circuit propagating through paralleled battery cells, which can create a fire.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a perspective view of a battery pack of an embodiment of the present disclosure;
FIG. 2 is a perspective view of one of several cell modules provided in the battery pack according to an embodiment of the present disclosure;
FIG. 3 is a perspective view of the battery pack with a top or cover removed to reveal the cell modules and flame arresting elements of embodiments of the present disclosure;
FIG. 4 is an enlarged perspective view of a portion of the battery pack showing a front arrester plate assembly having a first barrier and a second barrier according to an embodiment of the present disclosure;
FIG. 5 is an enlarged perspective view of a portion of the battery pack showing a back arrester plate according to an embodiment of the present disclosure;
FIG. 6 is an enlarged perspective view of a portion of the battery pack showing a deflector plate according to an embodiment of the present disclosure;
FIG. 7 is a perspective view of the deflector plate according to an embodiment of the present disclosure;
FIG. 8 is an enlarged perspective view of a portion of the battery pack showing an aspect of the deflector plate according to an embodiment of the present disclosure;
FIGS. 9A and 9B are perspective views showing aspects of the front arrester plate assembly and the back arrester plate, respectively, according to an embodiment of the present disclosure; and
FIGS. 10A and 10B are perspective views showing the manner in which the deflector plate is installed within an enclosure of the battery pack according to an embodiment of the present disclosure.

### DETAILED DESCRIPTION OF THE DISCLOSURE

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for description purposes and should not be regarded as limiting. The use of "including," "comprising," "having," "containing," "involving," and variations herein, are meant to be open-ended, i.e., "including but not limited to."

Various embodiments in the present disclosure mitigate risks due to a thermal runaway event. For example, various embodiments may mitigate the risk of fire propagating from a device containing the batteries. Various embodiments may mitigate the risk of explosions in the device containing the batteries. A thermal runaway event may include an electrochemical cell increasing its temperature through self-heating in an uncontrolled fashion. The thermal runaway progresses when the generation of heat from the cell is a higher rate than the heat it can dissipate. This may lead to a fire, explosion, and/or gas emissions.

During a thermal runaway event, there is a risk of a flame propagating outside the unit. It may be desirable to contain the flame within the equipment and at the same time prevent the flame from propagating to other cells which can further trigger an incident. In some circumstances, an inrush current from the failed cell may transfer its energy into parallel connected cells.

In some embodiments, flame propagation outside the battery pack may be eliminated or reduced using a flame arrester assembly, which in some embodiments may include a front flame arrester plate and/or a back flame arrester plate and/or a flame deflector. The battery cell temperatures may be maintained within acceptable limits using the flame arrester plates and the flame deflector that facilitate cell cooling, venting and flame arresting. The flame arrester plate assembly is configured to stop flame propagation from entering through openings within the battery pack enclosure. The flame arrester plate assembly may include one or more perforated plates within the battery pack enclosure that will absorb the heat of a flame entering and thereby extinguish the flame before it can pass.

In some embodiments, with a thermal runaway event, a flame that exits from the cell holder is blocked by a flame arrester plate fabricated with a metal mesh with small holes. The metal perforated mesh may act as an arrester plate. The perforation dimensions are optimized to extinguish the flame while allowing smoke to be emitted out of the unit. Specifically, the arrester plate can be configured with openings small enough to extinguish flames but large enough to receive outside air and exhaust hot air and smoke.

In some embodiments, the arrester plate is configured to be parallel to a surface through which hot air is exhausted.

In some embodiments, the arrester plates may be optimized for cell cooling by allowing air into the unit, which may be used to maintain the cell within its prescribed temperature range.

In some embodiments, the deflector plate may stop the flame and exhaust from exiting from the top gaps within an interior of the enclosure. Specifically, there may be possibility for the flame to escape from small gaps through the top and sides of the cell holder. The deflector plate made from a flame-retardant material may prevent the flame escaping through small gaps.

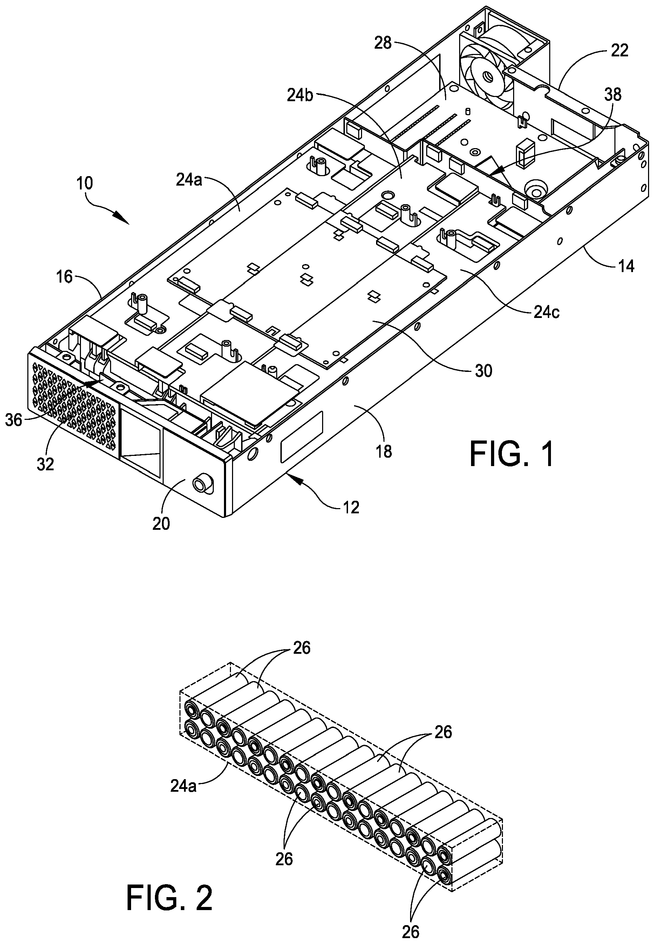

Referring now to the drawings, and more particularly to FIG. 1, an exemplary battery pack is generally indicated at 10. In the shown embodiment, the battery pack 10 includes an enclosure, generally indicated at 12, which is configured to support components of the battery pack. The enclosure 12 is a generally rectangular-cuboid structure that is shaped and sized to be inserted within a UPS to provide battery power to the UPS. In one embodiment, the enclosure 12 includes a bottom 14, two relatively long sides 16, 18, two relatively short ends 20, 22 and a top or cover, which is removed and not shown for illustration purposes. The shape and size of the enclosure 12 can be tailored to the intended use of the battery pack 10. The enclosure 12 is preferably fabricated from a rigid material having high stiffness and strength. In some embodiments, the enclosure 12 can be fabricated from steel or aluminum, or a suitable lightweight, rigid material, such as carbon fiber-reinforced plastic (CFRP) or glass fiber reinforced plastic (GFRP).

The battery pack 10 further includes several cell modules, indicated at 24a, 24b, 24c, which are supported by the enclosure 12. The cell modules 24a, 24b, 24c may be referred to herein as a heat-source component. In the shown embodiment, the battery pack 10 includes three cell modules 24a, 24b, 24c provided in the enclosure 12; however, it should be understood that any number of cell modules can be provided depending on the size, shape and orientation of the battery pack. FIG. 2 illustrates an exemplary cell module, e.g., cell module 24a, which includes several battery cells, each indicated at 26, that extend crosswise with respect to a length of the cell module. Specifically, the battery cells 26 are arranged in pairs, with one pair of battery cells stacked vertically on one another having positive ends facing one side of the cell module 24a and an adjacent pair of battery cells having negative ends facing the same side of the cell module. In one example, the polarities of the pairs of battery cells 26 alternate along the length of the cell module 24a. It should be noted that the battery cells of the cell modules can be configured in any suitable manner. As will be described in greater detail below, suitable battery connectors (not shown) are provided to connect the battery cells 24a, 24b, 24c to one another and to other components of the battery pack 10.

The battery pack 10 further includes a battery management system (BMS), indicated at 28, a printed circuit board (PCB) including electronic components, indicated at 30, and requisite interconnections to provide both power and communications within the battery pack. The BMS 28 is an electronic system that manages the cell modules 24a, 24b, 24c of the battery pack 10 to protect the cell modules, monitor the state of the battery pack, calculate secondary data, report data, and balance cell modules. For example, the BMS 28 may be configured to monitor voltage, temperature, current, and state of balance of the battery cells 26 of the cell modules 24a, 24b, 24c. The PCB 30 is a set of analog signal conditioning circuitry that provides an interface. For example, the PCB 30 may be used as an interface with sensors associated with the cell modules 24a, 24b, 24c. In one embodiment, the PCB 30 may embody a printed circuit board mounted within an interior of the enclosure on top of the cell modules 24a, 24b, 24c.

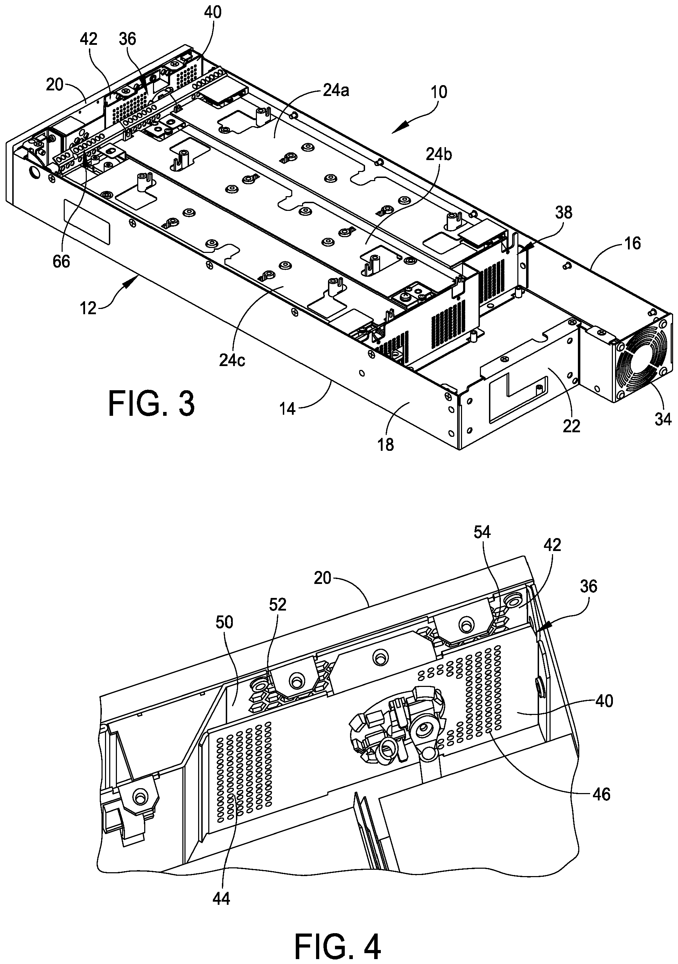

Referring additionally to FIG. 3, the enclosure 12 of the battery pack 10 further is designed to permit air to flow through the enclosure to cool the battery cell modules 24a, 24b, 24c. In one embodiment, one end of the enclosure 12, e.g., end 20, includes a vent 32 formed therein. The vent 32, which is positioned adjacent to side 16 on the end 20 of the enclosure 12, may include a pattern of openings that enable air to enter into the interior of the enclosure. The size and number of openings can be selected based on the desired airflow through the interior of the enclosure 12. The battery pack 10 further includes a fan module 34 provided on the opposite end, e.g., end 20, of the enclosure 12. The provision of the vent 32 and the fan module 34 may be referred to herein as an exhaust, which is associated with the enclosure 12 of the battery pack 10, to enable air to flow through the enclosure. In the shown embodiment, the fan module 34 is configured to draw air into the interior of the enclosure through the vent 32. The fan module 34 includes a generally rectangular-cuboid casing or housing that is configured to support the components of the fan module. In one embodiment, the housing of the fan module 34 includes an axial fan having a motor supported by a support structure, and a plurality of fan blades that extend from the motor. The axial fan can be configured to rotate in one direction, but can be configured to be reversible to rotate in clockwise and counterclockwise directions. The motor can include a several speed motor or a variable speed motor to vary a rate of rotation of the axial fan. The fan module 34 further includes a protective cover at the end of the casing to protect an operator from the axial fan during operation while enabling air to flow through the fan module.

Aspects of the present disclosure are directed to an arrester plate assembly includes one or more arrester plates disposed within the interior of the enclosure 12 of the battery pack 10. As will be described below, the arrester plate is a device having perforations or openings formed therein that allow free passage of gas but interrupts or inhibits the passage of flame. The arrester plate is configured to prevent the transmission of flame generated by the cell modules (as by a thermal runaway event) by extinguishing the flame with the surface of the plate. Such a flame is unable to pass through the small passages created by the perforations in the plate. However, gases are enabled to pass through the perforations formed in the plate. As is known, the arrester plate absorbs heat from a flame to drop the burning air/gas mixture below an ignition temperature thereby preventing the flame from forming.

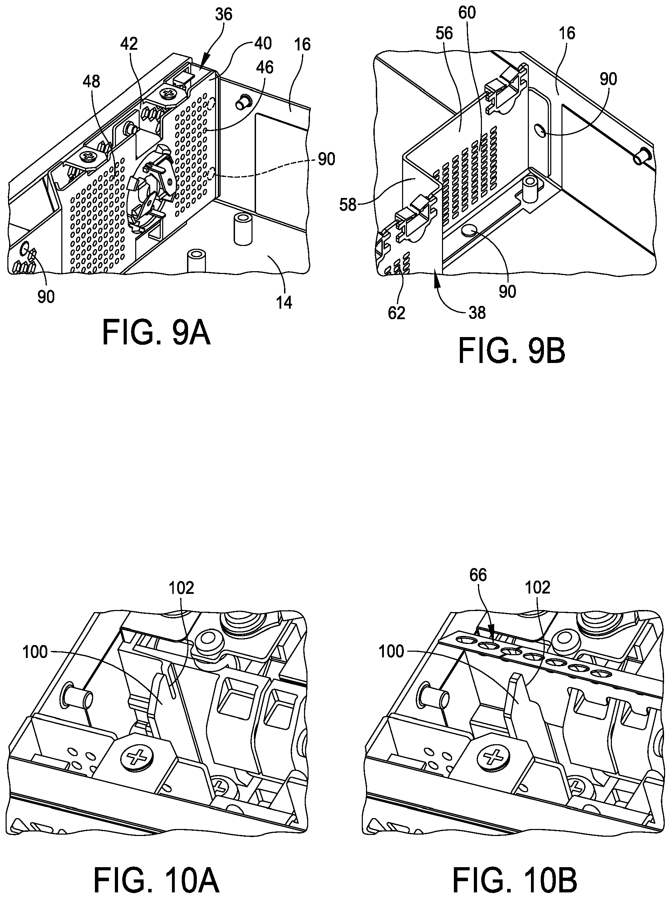

Referring to FIG. 3, the arrester plate assembly includes a front arrester plate assembly, generally indicated at 36 and a back arrester plate, generally indicated at 38. The front arrester plate assembly 36 may be referred to as a first arrester plate assembly and the back arrester plate 38 may be referred to as a second arrester plate. As shown, the front arrester plate assembly 36 is positioned adjacent to the vent 32 of end 20 and extends vertically within the interior of the enclosure 12 in a direction that is approximately parallel to the end 20. In a certain embodiment, the front arrester plate assembly 36 includes a first barrier 40 and a second barrier 42, which is spaced from and positioned adjacent to the first barrier. FIG. 4 illustrates the first barrier 40 and the second barrier 42 of the front arrester plate assembly 36. In the shown embodiment, the first barrier 40 and the second barrier 42 of the front arrester plate assembly 36 are suitably secured to the enclosure 12. The manner in which the first barrier 40 and the second barrier 42 of the front arrester plate assembly 36 and the back arrester plate 38 will be described in greater detail below with reference to FIGS. 9A and 9B.

The first barrier 40 includes a first planar body 44 that has a first pattern of openings, indicated at 46, and a second pattern of openings, indicated at 48, formed therein. The first planar body 44 of the first barrier 40 is positioned vertically within the interior of the enclosure 12 and parallel to the end 20, adjacent to the ends of the cell modules 24a, 24b, 24c. The second barrier 42 includes a second planar body 50 that has a third pattern of openings, indicated at 52, and a fourth pattern of openings, indicated at 54, formed therein. The second barrier 42 is positioned vertically within the interior of the enclosure 12 and parallel to the first barrier 40 and the end 20, adjacent to the end 20 of the enclosure.

The first pattern of openings 46 and the second pattern of openings 48 of the first planar body 44 of the first barrier 40 and the third pattern of openings 52 and the fourth pattern of openings 54 of the second planar body 50 of the second barrier 42 are configured to arrest a flame but to enable gas to pass through the barriers. Specifically, in one embodiment, each opening of the third pattern of openings 52 and the fourth pattern of openings 54 associated with the second planar body 50 of the second barrier 42 is larger than each opening of the first pattern of openings 46 and the second pattern of openings 48 associated with the first planar body 44 of the second barrier 42. The smaller first pattern of openings 46 and second pattern of openings 46 extinguish a flame generated by the cell modules 24a, 24b, 24c (as in a thermal runaway event), while the larger third pattern of openings 52 and the fourth pattern of openings 54 enable the gas (smoke) to pass through to the vent 32 in the end 20 of the enclosure 12. The size, shape and pattern of openings can be selected to optimize the performance of the front arrester plate assembly 36 including the first barrier 40 and the second barrier 42.

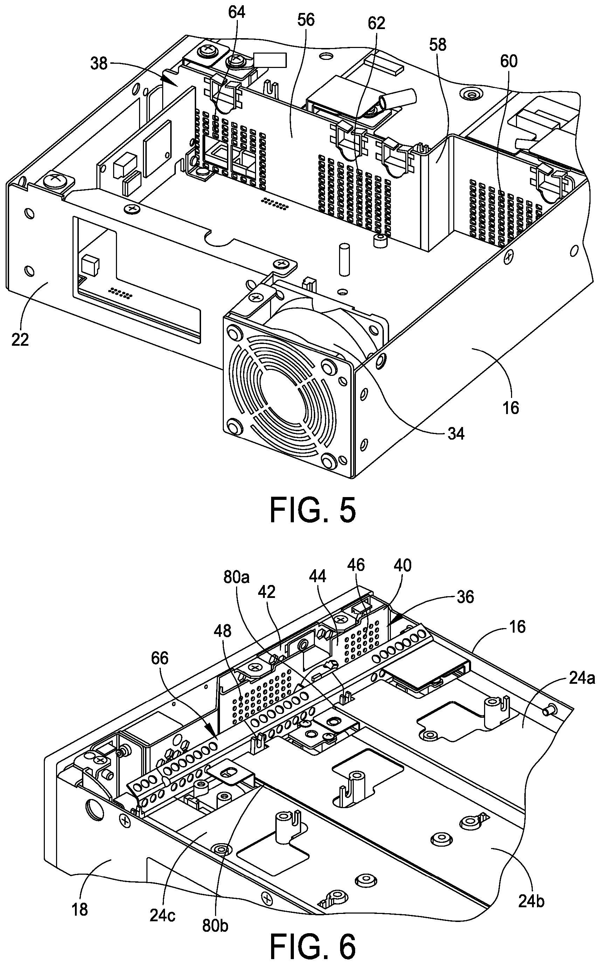

Referring to FIG. 5, the back arrester plate 38 is provided at the opposite end of the enclosure 12 proximate to end 22, which is proximate to the fan module 34. As shown, there is a space between the back arrester plate 38 and the end 22 of the enclosure 12 to enable gas (smoke) to flow through the fan module 34 when the fan module is operated to draw air through the enclosure. As shown, the back arrester plate 38 includes a relatively planar body 56 that spans a width of the enclosure 12 between sides 16, 18. The planar body 56 of the back arrester plate 38 can be configured with one or more steps, e.g., step 58, to accommodate the lengths of the cell modules 24a, 24b, 24c.

In the shown embodiment, the fan module 34 is positioned on one side of the enclosure, e.g., adjacent to side 16, at the end 22 of the enclosure. In an effort to draw air evenly through the fan module 34 across a width of the enclosure 12, the back arrester plate 38 includes three pattern of openings, namely a first pattern of openings 60, a second pattern of openings 62, and a third pattern of openings 64 formed therein. The arrangement is such that the first pattern of openings 60 is aligned with and corresponds to the cell module 24a, the second pattern of openings 62 is aligned with and corresponds to the cell module 24b, and the third pattern of openings 64 is aligned with and corresponds to the cell module 24c. As shown in FIG. 5, the first pattern of openings 60 is aligned with and corresponds to the fan module 34. To draw air evenly through the enclosure 12, each opening of the third pattern of openings 64 is slightly larger than each opening of the second pattern of openings 62, and each opening of the second pattern of openings 62 is slightly larger than each opening of the first pattern of openings 60. Thus, the third pattern of openings 64 enables more gas to be drawn through the back arrester plate 38 than the second pattern of openings 62, and the second pattern of openings 62 enables more gas to be drawn through the back arrester plate than the first pattern of openings 60. The size, shape and pattern of openings can be selected to optimize the performance of the back arrester plate 38.

As shown in FIG. 3, since cell modules 24b, 24c are each longer in length than cell module 24a, the step 58 in the planar body 56 of the back arrester plate 38 is provided to accommodate the difference in lengths. It should be understood that the back arrester plate 38 can be configured to accommodate cell modules of varying lengths and widths.

The front arrester plate assembly 36 and the back arrester plate 38 may be optimized to cool the cell modules 24a, 24b, 24c by allowing air into the enclosure 12, which may be used to maintain the cell modules within a prescribed temperature range. The front arrester plate assembly 36 and the back arrester plate 38 may be fabricated from any suitable flame-retardant material to prevent the flame propagating within the enclosure 12.

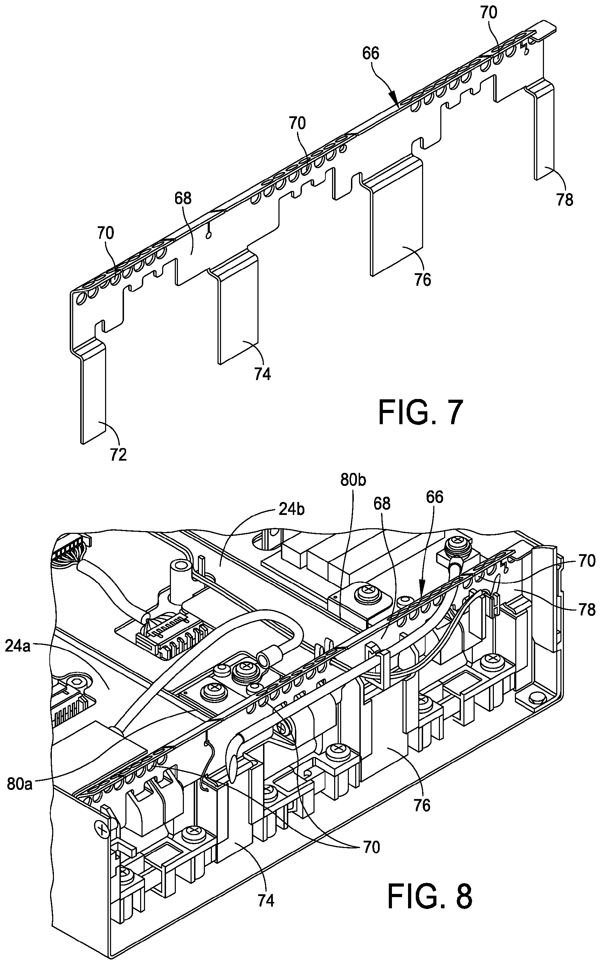

Referring to FIGS. 6-8, and in particular to FIG. 7, the battery pack 10 further includes a deflector plate, generally indicated at 66, which is positioned adjacent the first barrier 40 of the front arrester plate assembly 36 and extends vertically within the interior of enclosure 12 in a direction that is approximately parallel to the first barrier 40 of the front arrester plate assembly 36. The deflector plate 66 is a complex structure having a horizontal portion 68 configured with openings, indicated at 70, formed therein to enable gas to pass through the horizontal portion 68. The horizontal portion 68 is shaped to fill a gap near the top of the enclosure 12 while allowing gas to pass through. The deflector plate 66 includes several vertical portions that extend downwardly from the horizontal portion 68, including a first vertical portion 72, a second vertical portion 74, a third vertical portion 76, and a fourth vertical portion 78, which are sized and shaped to fill gaps between the sides of the enclosure 12 and the cell modules 24a, 24b, and gaps between the cell modules 24a, 24b, 24c. The vertical portions 72, 74, 76, 78 are sometimes referred to as fingers.

There is a possibility that a flame can escape from small gaps through the top and sides of the enclosure 24 and the cell modules 24a, 24b, 24c, and the deflector plate 66 is designed to inhibit this from happening. In one embodiment, as shown in FIGS. 6 and 8, the second vertical portion 74 of the deflector plate 66 is designed to block a space 80a between cell modules 24a, 24b and the third vertical portion 76 of the deflector plate 66 is designed to block a space 80b between cell modules 24b, 24c. The first vertical portion 72 of the deflector plate 66 is designed to block a space (not designated) between the side 16 of the enclosure 12 and cell module 24a and the fourth vertical portion 78 of the deflector plate 66 is designed to block a space (not designated) between side 18 and cell modules 24c. The deflector plate 66 may be fabricated from any suitable flame-retardant material to prevent the flame from escaping through the small gaps.

The manner in which the front arrester plate assembly 36 and the back arrester plate 38 are secured to the enclosure 12 is described with reference to FIGS. 9A and 9B. As shown, in one embodiment, the first barrier 40 and the second barrier 42 of the front arrester plate assembly 36 are secured to the walls of the enclosure 12, e.g., bottom 14 and side 16, by rivets, each indicated at 90. In another embodiment, the first barrier 40 and the second barrier 42 of the front arrester plate assembly 36 are secured to the walls of the enclosure 12, e.g., bottom 14 and side 16, by weldments.

The manner in which the deflector plate 66 is secured to the enclosure 12 is described with reference to FIGS. 10A and 10B. As shown in FIG. 10A, a component 100 disposed within the enclosure 12 includes a slot 102 formed therein, which is configured to receive a vertical portion of the deflector plate 66. FIG. 10B shows the deflector plate 66 positioned within the slot 102 of the component 100 to position and secure the deflector plate 66 in place.

One aspect of the present disclosure is directed to a method of assembling the battery pack 10. In one embodiment, the method includes providing the enclosure 12 as shown and described herein and positioning battery cell modules, e.g., battery cell modules 24a, 24b, 24c within the interior of the enclosure. Other components, such as the BMS 28 and the PCB 30, and associated components and wiring, further can be positioned and installed within the interior of the enclosure 12 of the battery pack 10. Once the battery cell modules 24a, 24b, 24c and the components are positioned and installed within the interior of the enclosure 12, the method further includes positioning the arrester plate assembly, including the front arrester plate assembly 36 having the first barrier 40 and the second barrier 42 and the back arrester plate 38 within the interior of the enclosure 12. As noted, the first barrier 40 and the second barrier 42 of the front arrester plate assembly 36 and the back arrester plate 38 include the patterns of openings 46, 48, 50, 52 and the pattern of openings 60, 62, 64 formed therein, respectively. The front arrester plate assembly 36 is parallel to end 20 of the enclosure 12. The back arrester plate 38 is parallel to the opposite end 22 of the enclosure 12.

The method further includes moving air across the battery cell modules 24a, 24b, 24c, with the enclosure 12 including the vent 32 provided at one end 20 of the enclosure and the fan module 34 (sometimes referred to as an air moving device) provided at the opposite end 22 of the enclosure.

The method further may include positioning the deflector plate 66 in the enclosure 12 in a position substantially adjacent and parallel to the front arrester plate assembly 36.

Various controllers may execute various operations discussed above, including the operation of the BMS 28 and PCB 30. Using data stored in associated memory and/or storage, the controller also executes one or more instructions stored on one or more non-transitory computer-readable media, which the controller may include and/or be coupled to, that may result in manipulated data. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Further examples are provided in the following clauses.

Clause 1. A system, comprising:
an enclosure;
a heat-source component disposed in the enclosure;
an exhaust associated with the enclosure, the exhaust being configured to exhaust heat generated by the heat-source component; and
an arrester plate assembly disposed within the enclosure, the arrester plate assembly including perforations formed therein,
wherein the arrester plate assembly is approximately parallel to the exhaust.

Clause 2. The system of clause 1, wherein the exhaust includes a vent provided at one end of the enclosure and an air moving device provided at an opposite end of the enclosure.

Clause 3. The system of clause 2, wherein the air moving device includes a fan module coupled to the enclosure, the fan module being configured to move air within the enclosure.

Clause 4. The system of clause 2, wherein the enclosure is a rectangular-cuboid structure having a first end at the one end of the enclosure and a second end at the opposite end of the enclosure.

Clause 5. The system of clause 1, wherein the arrester plate assembly includes at least one barrier having a plurality of openings formed therein.

Clause 6. The system of clause 5, wherein the at least one barrier includes a first barrier and a second barrier, the second barrier being positioned adjacent to the first barrier.

Clause 7. The system of clause 6, wherein the first barrier includes a first planar body having a plurality of first openings formed therein, and the second barrier includes a second planar body having a plurality of second openings formed therein.

Clause 8. The system of clause 7, wherein each opening of the plurality of second openings is larger than each opening of the plurality of first openings.

Clause 9. The system of clause 7, wherein the plurality of first openings includes a first pattern of openings and a second pattern of openings.

Clause 10. The system of clause 9, wherein the plurality of second openings includes a third pattern of openings and a fourth pattern of openings.

Clause 11. The system of clause 10, wherein each opening of the third and fourth pattern of openings is larger than each opening of the first and second pattern of openings.

Clause 12. The system of clause 1, wherein the arrester plate assembly includes a first arrester plate positioned adjacent and parallel to one end of the enclosure and a second arrester plate positioned adjacent and parallel to an opposite end of the enclosure.

Clause 13. The system of clause 12, wherein the second arrester plate includes a generally planar body having at least a first pattern of openings and a second pattern of openings formed therein.

Clause 14. The system of clause 13, wherein each opening of the second pattern of openings is larger than each opening of the first pattern of openings.

Clause 15. The system of clause 1, wherein the arrester plate assembly includes an arrester plate having a generally planar body with a plurality of openings formed therein.

Clause 16. The system of clause 15, wherein the plurality of openings includes a first pattern of openings and a second pattern of openings.

Clause 17. The system of clause 1, further comprising a deflector plate disposed in the enclosure and substantially parallel to the arrester plate assembly.

Clause 18. The system of clause 17, wherein the deflector plate includes a planar body having a plurality of openings formed therein, the deflector plate being configured to fill gaps within the enclosure.

Clause 19. A method of assembling a battery pack, the method comprising:
providing an enclosure;
positioning at least one battery cell module within the enclosure, the enclosure being configured to exhaust heat generated by the at least one battery cell module; and
positioning an arrester plate assembly in the enclosure, the arrester plate assembly including perforations formed therein,
wherein the arrester plate assembly is approximately parallel to an end of the enclosure.

Clause 20. The method of clause 19, wherein positioning the arrester plate assembly includes disposing a first arrester plate adjacent and parallel to one end of the enclosure and disposing a second arrester plate adjacent and parallel to an opposite end of the enclosure.

Clause 21. A system, comprising:
an enclosure;
a heat-source component disposed in the enclosure, heat generated by the heat-source component being configured to be exhausted from the enclosure through an exhaust associated with the enclosure; and
a deflector plate disposed in the enclosure and substantially parallel to the exhaust, the deflector plate including a planar body having a first portion with perforations formed therein and a second portion configured without perforations and positioned adjacent to a space between battery cell modules.

Clause 22. The system of clause 21, wherein the first portion of the deflector plate extends in a horizontal direction and the second portion of the deflector plate extends from the first portion in a generally vertical direction.

Clause 23. The system of clause 22, wherein the second portion of the deflector plate includes at least two vertical fingers each configured to fill a gap between the sides of adjacent battery cell modules.

Clause 24. The system of clause 21, wherein the exhaust of the enclosure includes a vent provided at the one end of the enclosure, the system further comprising an air moving device provided at an opposite end of the enclosure.

Clause 25. The system of clause 24, wherein the air moving device includes a fan module coupled to the enclosure, the fan module being configured to move air within the enclosure.

Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the disclosure. Accordingly, the foregoing description and drawings are by way of example only.

## Claims

1. A system, comprising:
an enclosure;
a heat-source component disposed in the enclosure;
an exhaust associated with the enclosure, the exhaust being configured to exhaust heat generated by the heat-source component; and
an arrester plate assembly disposed within the enclosure, the arrester plate assembly including perforations formed therein,
wherein the arrester plate assembly is approximately parallel to the exhaust.

2. The system of claim 1, wherein the exhaust includes a vent provided at one end of the enclosure and an air moving device provided at an opposite end of the enclosure.

3. The system of claims 1 or 2, wherein the arrester plate assembly includes at least one barrier having a plurality of openings formed therein or a first arrester plate positioned adjacent and parallel to one end of the enclosure and a second arrester plate positioned adjacent and parallel to an opposite end of the enclosure or an arrester plate having a generally planar body with a plurality of openings formed therein.

4. The system of claim 3, wherein the at least one barrier includes a first barrier including a first planar body having a plurality of first openings formed therein, and a second barrier positioned adjacent to the first barrier including a second planar body having a plurality of second openings formed therein.

5. The system of claim 4, wherein each opening of the plurality of second openings is larger than each opening of the plurality of first openings.

6. The system of claim 4, wherein
the plurality of first openings includes a first pattern of openings and a second pattern of openings;
the plurality of second openings includes a third pattern of openings and a fourth pattern of openings;
each opening of the third and fourth pattern of openings being larger than each opening of the first and second pattern of openings.

7. The system of claim 3, wherein the second arrester plate includes a generally planar body having at least a first pattern of openings and a second pattern of openings formed therein.

8. The system of claim 7, wherein each opening of the second pattern of openings is larger than each opening of the first pattern of openings.

9. The system of any of the above claims, further comprising a deflector plate disposed in the enclosure and substantially parallel to the arrester plate assembly.

10. The system of claim 9, wherein the deflector plate includes a planar body having a plurality of openings formed therein, the deflector plate being configured to fill gaps within the enclosure.

11. A method of assembling a battery pack, the method comprising:
providing an enclosure;
positioning at least one battery cell module within the enclosure, the enclosure being configured to exhaust heat generated by the at least one battery cell module; and
positioning an arrester plate assembly in the enclosure, the arrester plate assembly including perforations formed therein,
wherein the arrester plate assembly is approximately parallel to an end of the enclosure.

12. The method of claim 11, wherein positioning the arrester plate assembly includes disposing a first arrester plate adjacent and parallel to one end of the enclosure and disposing a second arrester plate adjacent and parallel to an opposite end of the enclosure.

13. A system, comprising:
an enclosure;
a heat-source component disposed in the enclosure, heat generated by the heat-source component being configured to be exhausted from the enclosure through an exhaust associated with the enclosure; and
a deflector plate disposed in the enclosure and substantially parallel to the exhaust, the deflector plate including a planar body having a first portion with perforations formed therein and a second portion configured without perforations and positioned adjacent to a space between battery cell modules.

14. The system of claim 13, wherein the first portion of the deflector plate extends in a horizontal direction and the second portion of the deflector plate extends from the first portion in a generally vertical direction.

15. The system of claim 14, wherein the second portion of the deflector plate includes at least two vertical fingers each configured to fill a gap between the sides of adjacent battery cell modules.
